# EUROPEAN PATENT SPECIFICATION

(11) **EP 4 246 311 B1**
(45) Date of publication and mention of the grant of the patent: **19.02.2025**
(21) Application number: 23177452.2
(22) Date of filing: 08.07.2020
(51) Int. Cl.: G06F 7/58

(54) **COMPUTER-IMPLEMENTED METHOD FOR OBTAINING A CUMULATIVE DISTRIBUTION FUNCTION FROM A SIGNAL**
COMPUTERIMPLEMENTIERTES VERFAHREN ZUM ERHALTEN EINER KUMULATIVEN VERTEILUNGSFUNKTION AUS EINEM SIGNAL
PROCÉDÉ MIS EN OEUVRE PAR ORDINATEUR PERMETTANT D'OBTENIR UNE FONCTION DE DISTRIBUTION CUMULATIVE À PARTIR D'UN SIGNAL

(43) Date of publication of application: 20.09.2023
(62) Divisional of application: 20382613.6
(73) Proprietor: Quside Technologies S.L., 08860 Barcelona (ES)
(72) Inventor: Abellan, Carlos, 08860 Castelldefels, Barcelona (ES); Martínez Saavedra, José Ramon, 08860 Castelldefels, Barcelona (ES); Martin, Ferran, 08860 Castelldefels, Barcelona (ES)
(74) Representative: Grünecker Patent- und Rechtsanwälte PartG mbB

(56) References cited:
- EP-A1- 2 863 234
- WO-A1-2017/155553
- WO-A1-2018/157752

## Description

The present invention concerns a device comprising one or more components that are adapted to perform a method for obtaining a cumulative distribution function from a signal according to claim 1 and a device comprising one or more components that are adapted to perform a method for obtaining a probability distribution function from a signal according to claim 9.

### Background

Nowadays, the use of truly random numbers has increased significantly specifically in view of, for example, encrypting information for transfer via the internet or performing physical simulations.

In general, random numbers are obtained by either using numeric generators that use an algorithm, which, based on some initial value, creates so-called pseudo-random numbers, which are not truly random, as they do depend on a deterministic algorithm. On the other hand, it is possible to use physical systems, such as lasers working close to the laser threshold or other systems for producing random numbers. Among these physical systems, specifically systems making use of quantum physical processes produce in fact random numbers which may also be referred to as true random numbers.

In order to make sure that the random numbers provided by such physical systems are unpredictable (and therefore truly random), it is necessary to obtain information on the operating conditions of the system, and the probability distribution function is one relevant measure in this regard. This is because under specific circumstances, such as thermal stress or interactions of the system with the environment, the system modifies its behavior from the ideal or expected one, affecting the random numbers produced from it. This can be observed when accessing the probability distribution function of the system and the different signals that contribute to the generation of random values.

In random number generation, the signals produced by physical systems (also referred to as the entropy sources) must be characterized and understood, as well as the noise signals that corrupt the ideal behavior of the entropy source, compromising the quality of the randomness obtained from them. These noise signals can be electronic noise, digitization noise or limited bandwidth effects or any other noises.

Currently known systems make use of rather expensive components like multi-bit digitizers that digitize the otherwise continuous signal of the entropy source. With this, it is possible to obtain the probability distribution function directly. However, those components are quite complex and expensive.

### Problem

In view of the above known prior art, the problem to be addressed by the invention is to provide an approach for obtaining a cumulative distribution function of a system from a signal at high efficiency, but reduced costs.

### Solution

This problem is solved by the device comprising one or more components that are adapted to perform a method for obtaining a cumulative distribution function from a signal according to independent claim 1 and a further device comprising one or more components that are adapted to perform a method for obtaining a probability distribution function from a signal according to independent claim 9. Further preferred embodiments of the invention are provided in the dependent claims.

The device comprising one or more components that are adapted to perform a method for obtaining a cumulative distribution function from a signal, the signal having a range, comprises receiving the signal at a first port of a 1-bit comparator and applying a stepping signal at a second port of the comparator, the stepping signal having a stepping range that is less than the range of the signal, wherein the stepping signal is applied in a first step with a first value to the second port and in subsequent steps the subsequent value is increased or decreased by the stepping range compared to the value in the immediately preceding step, collecting, for each step, an output value at the output port of the comparator, collecting the output values for each of the steps and obtaining, from the collection of output values, the cumulative distribution function.

Specifically, the signal may be a signal produced by an entropy source like a quantum random number generator, which produces a random signal. The signal preferably is a signal that allows for an interpretation of the signal by means of probability. For example, the signal may be comprised of a sequence of random fluctuations, like random voltage values, random phase relations or the like. Such a signal can be processed or analysed with respect to the characteristics of the source of the signal (like the entropy source) using a probabilistic interpretation of the signal. This means that specifically signals from which a mathematically reasonable cumulative and/or probability distribution function can be obtained are intended to constitute a "signal" according to embodiments of the invention.

For each step of the above described process, a statistically significant number of samples is measured and collected. Depending on the application and accuracy required on the cumulative distribution function, the number of samples can be adapted. The more samples are required, the longer the measurement may take. In some preferred embodiments, the number of samples ranges from 1,000 to 100,000,000 samples per step. But some other embodiments can operate with less than 1,000 samples, whereas others can require more than 100,000,000 samples. The invention is not limited in regard to the number of samples taken.

In this regard, it is noted that the stepping values are applied in succession one after the other each over a period of time while the signal is obtained. This means that a continuous or ongoing signal (for example from an entropy source that produces the signal over time) is overlaid or compared in the manner as claimed with the stepping signal where the value of the stepping signal changes over time.

According to the invention, the range of the signal is preferably a voltage range. For example, the signal may range from 2mV to 2V. However, the signal is not limited to a specific order of magnitude or a specific amplitude. Also, other values like the current (measured for example in mA) may be used as the range of a signal.

In the context of the invention, a computer may generally be understood as a general-purpose computer, like a PC, a laptop, a smartphone or a Raspberry Pi. However, the invention is not limited in this regard and any combination of electronic components that can interact, either based on hardware and/or based on software, to perform the steps of methods according to the invention may be considered to qualify as a "computer" in the sense of the invention. For instance, a combination of a comparator, a voltage source and an electronic circuit built with transistors, capacitors and resistors may be used to produce the stepping signal.

In the context of the invention, the stepping does not need to be applied from the "beginning" of the range of the signal (for example, the smallest value) to the end of the range of the signal (for example, the largest value), but it is also possible to process the signal backwards by starting at the upper end of the range of the signal and applying the stepping value backwards until the lower end of the range of the signal is reached. In this regard, whenever examples are mentioned that discuss the stepping beginning at the lower end, also embodiments that begin at the upper end of the range of the signal and perform the stepping backwards are covered.

In this regard, the stepping range does not need to be constant, but can, for each step, take any desired value. In this way, intelligent sweeping steps can be developed to obtain more precision in the recovery of the cumulative distribution function without increasing the time for processing significantly. For example, smaller steps may be performed where more resolution is needed, whereas larger steps may be performed in other ranges of the signal, specifically where less resolution is needed.

However, embodiments are also provided where the stepping range is constant for all steps.

The range over which the stepping signal is applied to the signal may comprise a specific range of the signal but is does not necessarily cover the complete range of the signal. For instance, when information is required for a specific subrange of the signal to be analyzed, only this subrange of the signal (which may be a subrange smaller than the total range of the signal) may be analyzed by applying the stepping signal with a corresponding stepping range to the signal.

However, embodiments are also provided where the range over which the stepping signal is applied covers the entire range of the signal to be analyzed.

The output value at the output port of the comparator will necessary be either 1 or 0, depending on whether the value of the signal is larger than the value of the stepping signal at the specific step or not. Alternatively, the 1 may be output in case the signal is smaller than the value of the stepping signal and a 0 may be output if the signal is larger than the value of the stepping signal.

In the sense of the invention, a one-bit comparator would be considered as being any physical entity (specifically an entity that makes use of electrical current) which has a binary output value (e.g. either 1 or 0), and wherein the one-bit comparator has an input port for the actual signal and a second port, with which the stepping signal can be introduced. It further comprises an output port independent of the aforementioned first and the second ports, which acts as an output port and outputs the output value.

The set of output values obtained from the one-bit comparator corresponds, if normalized, to the cumulative distribution function of the entropy source and can thus be used for its retrieval.

With this device, it is possible to use comparably inexpensive electronics for obtaining the cumulative distribution function of a signal. Once this is obtained, post-processing can be applied to obtain relevant information to assess statistical properties of the analyzed signal. For example, the numerical derivative of the cumulative distribution function can be applied to obtain the probability distribution function. This method, when applied to analyzing entropy sources (physical systems for random number generation), therefore provides access to the probability distribution function with simple and scalable electronics. This enables assessing the entropy of the system, which is not easily possible without the application of this invention.

In particular, the capability of performing this analysis with inexpensive electronics enables quality assessment of entropy sources to provide strong randomness and entropy estimates in systems, which normally lack these capabilities, as in mobile or loT environments.

Additionally, as comparators can work at high frequencies, this allows for realizing fast and reliable means for obtaining the cumulative distribution function (CDF) at low costs.

In one embodiment, the method further comprises, before applying the stepping signal, pre-processing the signal to determine a range of the signal where the signal fluctuates, and applying the stepping signal with a first value that is smaller than the lower end of the range of the signal where the signal fluctuates and applying the stepping signal until a last value is reached that is larger than the upper end of the range of the signal where the signal fluctuates.

With this, the accuracy with which the cumulative distribution function is obtained from the input signal can be increased as it is made sure that the whole range of the signal is in fact covered by the sampling procedure applying the stepping signal.

Further, the stepping range may be a fixed value. A fixed value reduces the processing required for obtaining the cumulative distribution function, specifically for cases where absolute or almost absolute accuracy is not necessary, thereby increasing the speed at which the cumulative distribution function can be obtained.

More specifically, the fixed value may be calculated by dividing the range of the signal by a stepping interval number N.

The number N can be arbitrary. However, it is preferred that the fixed value of the setting range has a value that is at least 1, preferably 2, most preferably 3 orders of magnitude smaller than the value of the range of the signal. Consequently, N may preferably be larger than 10, more preferably larger than 1000, most preferably larger than 10⁵.

The stepping range is a dynamic value in one embodiment and for each subsequent step, the stepping range to be added to the previous value is determined based on at least one of the range of the signal, the output value at the output port of the comparator, or the number of steps already applied. By using information on the current processing of the signal or range of the signal, characteristics of the signal can be taken into account when determining the stepping range, thereby making sure that also in case of significantly fluctuating signals the stepping applied reliably determines the CDF. This method provides higher accuracy in recovering the CDF with reduced processing time, which is useful in order to optimize the number of measurements that are required by providing a smaller stepping range in the range where the signal has sharp statistical variations and a larger stepping range where the signal has flatter statistical changes.

In a further embodiment, the method comprises normalizing the number of output values (for example those that correspond to the signal being smaller than the stepping value), thereby obtaining the cumulative distribution function. The counts of output values indicating that the signal is smaller than the stepping value result when accumulated immediately in the cumulative distribution function when these output values are normalized by means of dividing them by the total number of counts obtained. In one embodiment, this normalizing of the number of output values corresponding to the signal being smaller than the stepping value can be applied before the obtained CDF is output to another entity or, for example, to the user, thereby providing the actual cumulative distribution function for the further processing.

Specifically, the method may comprise the step of counting the number of output values from the comparator that are below the value of the stepping signal, normalizing the counts by the total number of output values accumulated during the application of this value of the stepping signal, and repeating the same process for all the stepping values of the stepping signal and obtaining the cumulative distribution function from the normalized counts.

It may be provided that the method further comprises retrieving the probability distribution function from the cumulative distribution function by obtaining the derivative of the cumulative distribution function. Specifically, the derivative may be the numerical derivative. As the probability distribution function and the cumulative distribution function are related to each other by the cumulative distribution function being the integral function of the probability distribution function, commonly known means for efficiently determining a numerical derivative of the cumulative probability distribution function can be used to efficiently obtain the actual probability distribution function (PDF) of the signal, which could otherwise not be accessed by using a one-bit comparator. This implementation still has cost advantages, as it is still only necessary to use the one-bit comparator for obtaining the information that is necessary to reconstruct the probability distribution function.

Before obtaining the derivative of the cumulative distribution function, the cumulative distribution function may be pre-processed, comprising at least one of de-noising, spline fitting, smoothing, expanding.

Reducing statistical noise due to the finite number of measurements performed during the application of this invention, and ensuring that the recovered CDF is monotonically increasing, is preferable in some embodiments, in particular, when the derivative function is applied to retrieve the PDF from the CDF.

As the one-bit comparator only provides for a stepwise reconstruction of the cumulative distribution function, i.e. results not in a continuous but discrete number of points, these further means can allow for smoothening the obtained cumulative distribution function without this having a significant impact on its value in reconstructing the probability distribution function with high reliability. On the other hand, by applying this pre-processing, obtaining the probability distribution function by calculating the numerical derivative is made easier, as the cumulative distribution function after the pre-processing corresponds to a smoother curve, thereby making it easier in view of the processing complexity and the achievable accuracy of calculating the numeric derivative, i.e. the probability distribution function.

According to a further aspect of the invention, a device comprising one or more components that are adapted to perform a method for obtaining a probability distribution function from a signal, the signal having a range, is provided, the method comprising receiving the signal at a port of a multi-bit digitizer having a digitization range and comprising a number of K bins, obtaining digitization values at the bins of the multi-bit digitizer and applying, subsequently, a shifting value to either the signal or the digitization range and obtaining a second number of K bins, wherein the shifting is applied successively over a shifting range until at least the range of the signal has been covered with the digitization range of the multi-bit digitizer and obtaining, from all K bins obtained, the probability distribution function.

By using the multi-bit digitizer in this specific way, the disadvantage of a comparably low resolution of multi-bit digitizers can be overcome because by shifting the respective values, this low resolution can be "artificially increased" to a higher resolution, thereby improving the accuracy of the obtained probability distribution function.

In a more specific embodiment, the shifting value is a fixed value. Using a fixed shifting value grants computationally simple access to the PDF.

It may be provided that the shifting value and/or the number of shifts is determined by comparing the digitization range of the multi-bit digitizer and the range of the signal. When the digitization range of the multi-bit comparator is small compared to the range of the signal (for example 10⁻¹ or 10⁻² or 10⁻³ or 10⁻⁵ times the range of the signal), it can be preferable to apply a large value for the shifting value that is still below the digitization range in order to cover the whole signal range with a small amount of shifting steps. If the digitization range is comparably large with respect to the range of the signal, for example, covers 10% of the range of the signal, it can be preferred to use small shifting values in order to increase the accuracy with which the cumulative distribution function is obtained.

By this, depending on the signal to be processed, the capabilities of the multi-bit digitizer can be used efficiently.

In a further embodiment, before comparing the digitization range of the multi-bit comparator and the range of the signal, the signal is pre-processed over the total signal range, thereby obtaining a range over which the signal fluctuates and using the range over which the signal fluctuates as the range of the signal.

With this, only the regions of interest to the signal are processed in order to obtain the probability distribution function, thereby reducing the number of shifting steps that need to be performed and potentially also resulting in changing or dynamic shifting values when, for example, a sub-range of the range of the signal has constant values, which can then be processed with comparably large shifting steps, whereas in case the signal fluctuates significantly, smaller shifting steps may be taken in order to obtain high accuracy.

In one embodiment, the method further comprises retrieving the cumulative distribution function from an integration of the probability distribution function. More specifically, the integration may be a numerical integration. Though the probability distribution function already provides information on the system, it may, in some circumstances, be more appropriate to handle the cumulative distribution function which can be obtained once the PDF is obtained.

### Brief description of the drawings

- Figure 1: shows a schematic depiction of a system for implementing the method according to one embodiment;
- Figure 2a+b: show a schematic depiction of applying the stepping signal to the signal;
- Figure 3: shows one embodiment of realizing the pre-processing of a signal comprising sections with fluctuation and sections without fluctuation;
- Figure 4: shows a flow diagram of one embodiment of a method;
- Figure 5: shows an example of processing a signal using a multi-bit-digitizer

### Detailed description

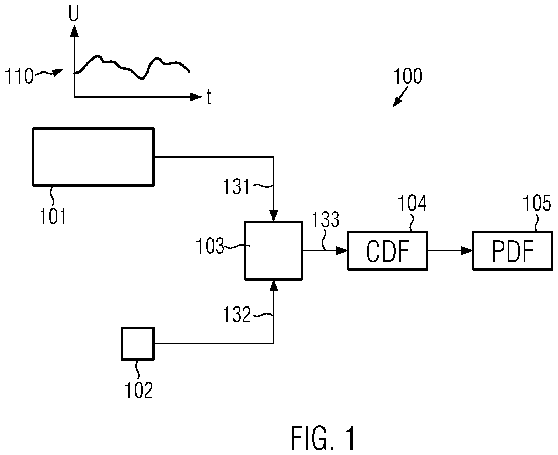

Figure 1 shows one embodiment of a system with which the invention can be implemented.

In Figure 1, a signal source 101 (also referred to as entropy source in the following for the specific application of generating random numbers) is indicated only schematically. This signal source will, in the general context of the invention, be some kind of an entropy source, preferably a physical random signal generator. This entropy source 101 will generate a signal 110 graphically depicted here as a function of voltage over time.

The shape of the signal is generally random as the source 101 produces random fluctuations.

As example of the system 101, the phase relation of two laser sources, where one of them is driven above the lasering threshold and the other one is driven almost at the lasering threshold, such that the phase of the second laser source, when reaching the lasering threshold, is arbitrary with respect to the first laser source, can be considered.

The two signals of the laser sources can be introduced, for example, into a multi-mode interferometer (MMI interferometer) and a signal corresponding to the phase relation can be obtained. This can be done, for example, with photo detectors, such as photo diodes. The output of these photo diodes, i.e. the voltage of the signal output by the photo diodes depends on the phase relation of the laser beams, and as such can take any value within a specific voltage range ranging from 0V (distinction of the laser signals) up to a maximum voltage reached by constructive interference of the signals of the laser sources.

Between these values, the signal can take any value.

Usually, for obtaining random numbers, two photo detectors will be used. One photo detector is provided with the signal passing the MMI and the other one is provided with the signal having experienced a phase shift. This results in the signal at the one photo detector being larger or smaller than the signal of the other photo detector. Introducing both signals into a comparator will lead to random output values of 1 and 0, thereby creating, from a continuous entropy source digitized random bits.

For obtaining information on the reliability of the entropy source, it is, however necessary to take a different approach.

As can be seen in Figure 1, the signal 110 of the entropy source 101 is introduced into a comparating unit 103. In one embodiment, this comparating unit is a one-bit comparator. This one-bit comparator 103 comprises two input ports and a single output port.

The signal 110 is input in the input port 131 of the one-bit comparator 103.

A comparing signal, referred to in the following as a stepping signal, is introduced via the other input port 132. This stepping signal may originate from a source 102 of the stepping signal, which preferably can be tuned corresponding to the voltage range of the signal 110.

According to the invention, a plurality of stepping signals are applied to the input port one after the other where a subsequent stepping signal is larger by a stepping range compared to a previous signal.

Preferably, in order to increase the accuracy with which the cumulative distribution function can be obtained according to the invention, the stepping signal can be applied in stepping values to the signal 110, wherein the stepping values correspond to 1/100 of the total signal range. For example, if the total signal range of the signal 110 is 100 mV, it is preferred that the stepping signal can be applied at the stepping values of 1 mV to the signal, beginning, for example, at the lowest value of the signal 110 (for example 10 mV) up to at least the maximum value of the signal at, for example, 100 mV. Even more fine-grained stepping values might be taken if the source 102 of the stepping signal can be tuned to even smaller stepping values of, for example 0.1 mV or less. It can also be provided that the stepping range is larger than 1 mV in cases where high resolution is not needed.

By applying the stepping signal at each point in time to the actual signal, the comparison of the signal and the stepping signal will result at the output port 133 of the comparator in a sequence of 0s and 1s. For example, a 0 may be obtained when the voltage of the signal is smaller than the voltage applied in this specific step of the stepping signal. For example, if the signal strength is 50 mV and the value of the stepping signal is 52 mV, this will result in a 0 being output at the output port. On the other hand, if the voltage value of the signal is 50 mV and the value of the stepping signal is 48 mV, this will yield a 1 at the output port 133. By collecting over time, the 0s and 1s for each point of the signal with each stepping value being applied to the signal at this point, the cumulative distribution function is obtained by taking, for example, all 0s or all 1s output at the output port. From this, by applying, for example, normalization to the thus obtained cumulative distribution function, it is possible to obtain the probability distribution function of the source.

For each stepping value applied to the input port 132, a collection of output values is stored. For instance, if 1,000 output values are collected, or 100,000 output values are collected, the ratio proportion of values of the signal that are larger (or smaller) than that specific stepping value can be obtained. When normalized, an approximate measurement of the probability that the signal S is smaller than a specific value *s,* P(S < s) is obtained, which, when obtained for all possible times t, is the definition of the cumulative distribution function signal Fs(s) = P(S < s).

The cumulative distribution function is obtained according to Figure 1 as a first result 104, and from this, as a result 105, the probability distribution function can be obtained. From the probability distribution function, but also at least to some extent from the cumulative distribution function, it is possible to obtain information regarding the reliability of the source 101 of the signal 110.

By obtaining the CDF (cumulative distribution function) with the means according to the invention, also methods for evaluating the quality of the source can be realized at lower costs.

This can be, for example, certifying specific systems according to their quality for later use. Additionally or alternatively, this may be used in or order to monitor whether the quality changes during the application of the entropy source 101. For example, it would be possible, on the one hand, to use the source for generating, together with a corresponding one-bit comparator or another comparator that determines 0s and 1s depending on the input value relative to a comparative value to generate a random sequence of bits, while at the same time, using another output of the entropy source 101 for determining its quality with the above scheme of Figure 1. This method allows for evaluating the quality of the entropy source with high accuracy even when deployed. This enables precise quality checks when integrated within larger systems.

Thereby, it would be possible, for example, to determine the permanent quality of the source or to determine the quality at some intervals, for example, several minutes or hours. If it is determined that the quality of the source deteriorates, measures can be taken. For example, if an (automatic) comparison of the obtained probability distribution function with an ideal probability distribution function of the system shows that the obtained probability distribution function differs from the ideal probability distribution function by more than a (preset) threshold, the entropy source could be turned of automatically.

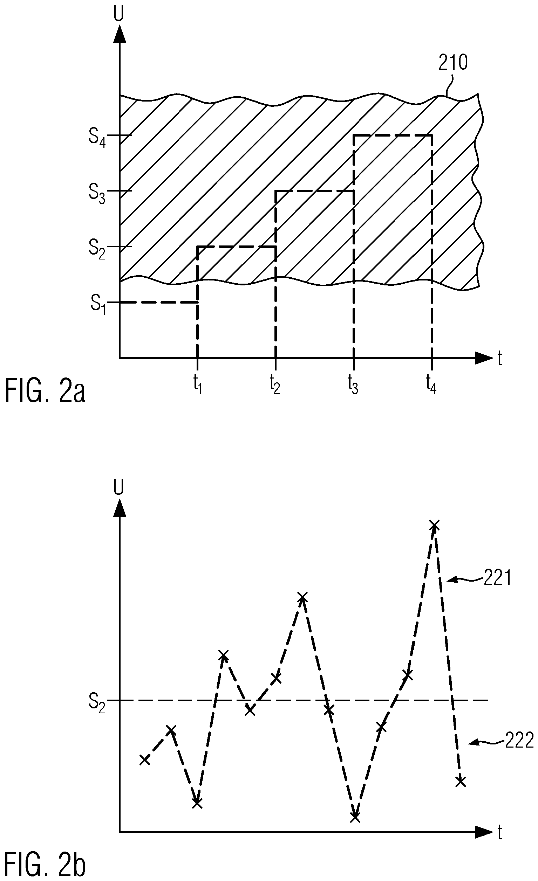

In order to illustrate the sampling of the signal 110 by applying the stepping signal with changing values, Figure 2a shows an exemplary signal 110, to which a stepping signal is applied at different values S₁ to S₄. The signal 110 is a signal measured over time and the greyed area shows all values of the signal within the range of the signal. The range of the signal, in the context of fig. 2a, is constituted by the envelope of the grey area 210. The upper and lower border of the grey area constitute respective upper and lower limits of the signal. The difference between the lowest value of the signal and the largest value of the signal may determine the range of the signal.

As is seen in fig. 2a, the signal is a voltage signal over a period of time. Within the area 210, there may be millions or even billions of values obtained from the entropy source each at a different point in time.

In fig. 2a, the signal 110 reaches different voltage values U over a period of time t. Over different time intervals, different stepping values S₁, S₂, S₃ and S₄ are applied to the signal. This means that the first stepping value S₁ is applied over a first time interval or time period t₁. The second stepping value S₂ is applied to the signal over a second time interval t₂ beginning after the first time interval t₁ has ended. Correspondingly, the other stepping values S₃ and S₄ are applied over corresponding time intervals t₃ and t₄. It is noted that the beginning of a subsequent time interval does not necessary fall together with the end of a preceding time interval. For example, while for some embodiments the end of the time interval t₁ may be identical to the beginning of the time interval t₂, in other embodiments, the end of the time interval t₁ may be different (and spaced apart in time) from the beginning of the time interval t₂. The invention is not limited in this regard and the length of the time intervals as well as their relation relative to each other may be chosen depending on the circumstances. For example, in a time interval where there are significant fluctuations of the signal, it may be appropriate to take more samples by increasing the length of the time interval over which the stepping signal is applied. Furthermore, the order in which these values are applied can be either from a low value to a larger value (i.e. beginning with S₁ and going up to S₄) or the other way around or completely random. For obtaining the cumulative distribution function or the probability distribution function, the timely order of the stepping values is of no relevance and may, therefore, likewise be chosen depending on the circumstances.

The stepping values S₁ to S₄ are, as explained above, the input at the input port 132, whereas the voltage value of the signal 110 is the input at the input port 131 of the comparator 103 in Figure 1.

As can be seen in Figure 2a, the stepping signal with the value S₁ is during the time interval t₁ below the voltage value of the signal 110. Thus, applying the stepping signal with the value S₁ will result at the output of the comparator in a 0 being output if the implementation is such that if the stepping signal is below the signal, a 0 is output. This result will be obtained for each point in time over the time interval t₁. The number of "points" depends on the time resolution of the system, i.e. how many samples the comparator can process per second. If, for example, the comparator can process 10⁶ input values per second, this will result in 10⁶ 0s being output by the comparator over the time interval t₁.

The stepping signal is then applied with the next stepping value S₂ being larger by a stepping range than the stepping value S₁ to the signal for the next time interval t₂. As is seen from Fig. 2a, the stepping signal S₂ is sometimes larger and sometimes smaller than the values of the signal.

This leads to results in the time interval t₂ where there are 1s and 0s as output values obtained from the comparator. Keeping with the above example, assuming that once again 10⁶ values are obtained over the time interval t₂, 2 · 10⁵ 0s may be obtained while 8 · 10⁵ 1s are obtained as output values.

Next, the stepping signal is applied with the stepping value S₃ over the time interval t₃. This may lead to another distribution of output values (i.e. 0s and 1s). The same holds for the stepping value S₄ subsequently applied over the time interval t₄.

To show what actually happens more clearly, fig. 2b shows the relation between the values of the signal and the stepping value over a time period that is small compared to the time over which the signal is processed in fig. 2a. For example, the time period shown in fig. 2b may be 1/100 of the length of the time interval t₂ where the stepping signal S₂ is applied.

As is seen from fig. 2b, there is a number of values of the signal that are above the stepping signal S₂. These are denoted with 221. When comparing these values of the signal to the stepping signal S₂, the output at the comparator will be a 1 for each of these signal values 221, in some embodiments (in others, it will be a 0). The other signal values 222 are smaller than the stepping signal S₂. When these are input into the comparator together with the stepping signal S₂, the output will be a 0 (in other embodiments, it will be a 1). This output is of course only provided if the comparator outputs a 0 if the stepping signal is larger than the value of the signal and a 1 if the stepping signal is smaller than the value of the signal. In other embodiments, this assignment can be the other way around.

The dashed line connecting the values of the signal (depicted as crosses) is only shown in order to make the timely order of the values of the signal easier to view.

From fig. 2b, a sequence of output values will be obtained that, in timely order, is 0001011000110. This is just but one example and does not limit the invention. The timely order of the output values is of no relevance in obtaining the cumulative distribution function. Relevant information obtained from this sequence is the number of 1s and the number of 0s which can then be used further in order to derive the cumulative distribution function.

In the example of fig. 2a and 2b, the difference between the stepping values S₁ to S₄ is identical for all subsequent stepping values. The differences between the values S₁ to S₄, i.e. the stepping ranges of the stepping signal can be obtained or calculated in different ways.

In one embodiment, this difference (the stepping range) can be a fixed value (as in fig. 2a). However, an arbitrary fixed value would perhaps not be helpful in order to accurately obtain a CDF.

Therefore, it can be considered in one embodiment to perform some pre-processing of the actual signal 110 in order to determine the stepping range.

For example, the stepping range can be calculated by dividing the range of the signal (which is basically defined by its maximum voltage value and its minimum voltage value) by a natural number larger than 0, called "N". N may also be predefined and may depend, for example, on the accuracy that is to be achieved in obtaining the cumulative distribution function. For example, in order to achieve an accuracy of approximately 1%, N may be set to N = 100. A larger value of N = 1000 may be chosen if more accuracy is to be obtained. Furthermore, if it is known, for example, due to the pre-processing, that the signal does not fluctuate significantly, a smaller number N may be sufficient, for example, N = 50. However, also other values for N may be used. Indeed, N may be selected to be N>10⁵ or N>10⁷.

The above embodiment results in a fixed stepping range over the whole signal range where this stepping range is added to a preceding value of the stepping signal for calculating the subsequent value of the stepping signal.

However, in alternative embodiments, the stepping range may also be a dynamic value, which is dynamically determined for at least some of the steps to be performed during the method. For example, from a first step in the procedure, wherein the first stepping value (for example, S₁ in Figure 2a) is applied, the stepping range to be added to this value in order to obtain the stepping value S₂ may be determined based on, for example, the total range of the signal or the output value at the output port of the comparator or the number of steps already applied.

If, for example, for previously performed steps, it was always determined that the stepping signal is below the voltage value of the actual signal 110 in Figure 2a, the stepping value may be increased in order to finally reach a value that is above at least some of the voltage values of the signal, thereby, so to say, skipping intermediate stepping values that would otherwise have been chosen but would not have provided more information. Additionally, depending on the complexity of the signal (such as the number of maxima and minima being determined in the procedure carried out so far), it may be determined in order to obtain a reliable accuracy, to apply comparatively small stepping ranges in order not to erroneously miss intermediate maxima and minima.

The use of a constant stepping range may also be combined with the embodiment of a dynamic stepping range.

For example, a constant stepping range may be applied as long as a specific condition is fulfilled (for example, the number of counts showing that the stepping value is above the voltage value of the signal is constantly increasing). Only in the case that, from a first stepping value to a second stepping value, the number of counts showing that the stepping value is above the voltage value is decreasing, a smaller stepping range may be chosen in order to ensure that maxima and/or minima are not missed.

While a dynamic calculation of the stepping range may be considered, it is also possible to dynamically change the length of the time intervals over which the respective stepping values are applied. The time intervals t₁ to t₄ are shown in fig. 2a to be identical. The length of the time intervals may be preset. It can, however, also be calculated based on a pre-processing of the signal over a preceding period of time. If the signal is considered to fluctuate significantly, longer time intervals may be appropriate in order to reliably obtain information on the cumulative distribution function. Therefore, in such a case, the length of the time intervals may be extended for example beginning from a standard interval length. Furthermore, as for the above embodiment with respect to the dynamic change of the stepping values, embodiments may be provided according to which the length of a subsequent time interval is determined based on the results obtained during the current time interval. If the current time interval has revealed only small fluctuations, it may be reasonable to assume that the signal will not fluctuate significantly over the subsequent time interval, making a shorter subsequent time interval sufficient to obtain information on the cumulative distribution function with sufficient reliability.

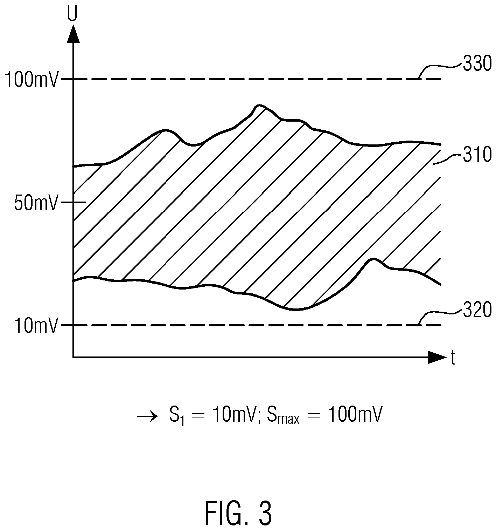

Figure 3 shows one embodiment of pre-processing the original signal 310 over a period of time before the stepping values are applied to the signal in order to determine portions over which the signal actually fluctuates. The description that follows is made under the assumption that the qualities of the signal, specifically its range, are almost constant over long periods of time. If, thus, the signal is monitored over a sufficiently long period of time and maximum and minimum values are obtained, it is highly likely that for subsequent time periods, the range of the signal will be within the obtained maximum and minimum values.

If, for example, the signal 310 in fig. 3 only fluctuates with respect to its voltage values above a lower threshold of 10 mV (shown here as dashed line 320) and below a maximum value of 100 mV (shown here as dashed line 330), the actual region within which the signal 310 fluctuates may be between 10 mV and 100 mV. This can be determined before actually applying the method according to the invention and may be used to determine the stepping values and the stepping ranges. For example, with this information, the first value of the stepping signal (for example, the value S₁ of Figure 2a) may be selected to be 10 mV, as no additional information would be expected when selecting the stepping values that are below 10 mV because the signal would be larger than this value. The maximum signal may be selected to be 100 mV, and as already previously explained, the stepping range for determining the values of the stepping signal may then be selected to obtain a specific accuracy within this interval 10 mV to 100 mV.

Furthermore, in order to reliably sample the signal, it may be that the first value of the stepping signal is selected to be slightly below the lowest boundary of the interval over which the signal actually fluctuates. In the example of Figure 3, this may, for example, lead to S₁=8mV. Likewise, the maximum value of the stepping signal may be chosen to be slightly above the maximum voltage value of the signal, for example, 102mV with a stepping range of 0,1mV, for example.

This pre-processing may occur before the actual processing of the signal with the comparator according to Figure 1.

However, it is only optional and, instead of this, it may also be considered to always apply identical stepping ranges over an identical voltage region over the same time intervals by default, based on knowledge of the signal a priori. While this may make it more difficult to obtain a reasonable cumulative distribution function, it will significantly reduce the computational complexity.

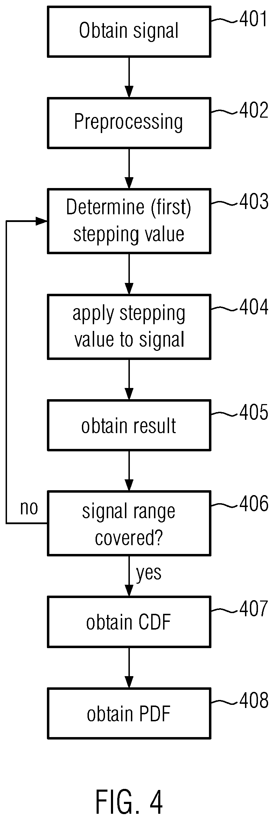

Figure 4 shows a flow chart of the method according to the invention that was explained so far and will be used to explain the actual process for obtaining, from an original signal, the cumulative distribution function (CDF) and/or the probability distribution function, according to one embodiment.

In a first step 401, the signal is obtained. This signal can be obtained directly from the entropy source or it can be provided, for example, from a recording medium, on which the actual signal was recorded. In any case, the signal will be provided to the input port of the comparator once the stepping signal is to be applied.

Before inputting the signal into the comparator, some pre-processing of the signal obtained can take place in Step 402. This pre-processing can, for example, comprise determining the range of the signal (specifically its maximum voltage value). The preprocessing described for example in relation to fig. 3 may be performed in Step 402.

In the next step, the stepping value to be applied is determined in Step 403. When the method is initialized, the step 403 will comprise the determination of the first stepping value when it is first performed. This determination of the first stepping value may simply be or comprise taking the first stepping value of a preset number of stepping values. Depending on whether some pre-processing was performed in Step 402 and depending on whether the value of the stepping signal is dynamically determined for the first step and/or for each or at least some of the subsequent steps, the determination of the stepping value may differ for some embodiments.

In any case, once the value of the stepping signal is determined in Step 403, this value is then applied to the comparator in Step 404. This means that the signal is provided to the input port 131 of the comparator 103 and the stepping signal with the respective stepping value is applied to the input port 132 of the comparator 103. From this, a result is obtained in Step 405. For example, a counter can be obtained that determines how many times the voltage value over the whole duration of the signal is below the value of the stepping signal at this specific point or how many times it is above. This will result in a number of 0s and 1s detected in a given interval of time. The number of 0s and 1s will depend on the specific stepping value, on the sampling clock (in case of clocked operation) or on the dynamics of the signal and bandwidth of the electronics in the case of a free-running clock. Assuming, for example, that 1,000,000 points of the original signal are taken in a specific time interval (like interval t₁ explained above), this will result, for example, when applying the first stepping value as the stepping signal in 500,000 0s and 500,000 1s.

In the next step 406, it is then determined whether the whole signal range was already covered with the stepping signal, i.e. was completely sampled with the steppings performed so far. When the first stepping value was applied, this will usually not be the case, and in step 406, it will be determined that the whole signal range has not been covered. The method then returns to step 403 and determines a new stepping value (for example by applying a preset or dynamically calculated stepping range to the previous stepping value) and applies the same to the signal in order to obtain results in step 405. For this new stepping value, it might be determined as a result that, for example, only 250,000 out of 1 million values making up the signal are above the stepping value while 750,000 are below. Corresponding numbers of 1s and 0s will then be collected and/or counted.

This procedure is then performed until it is finally determined in step 406 that the whole signal range has been covered. This can, for example, be determined by having performed all the steps initially calculated based on the pre-processing. For example, if based on the pre-processing, a number of 5,000 steps was necessary to cover the whole signal range, after having performed 5,000 steps, the decision in step 406 would be "yes", i.e. the whole signal range was covered. Without pre-processing, this may nevertheless be determined, for example, by determining that, after several steps have been performed with different results being obtained, there are then some steps performed, for which the obtained result always shows that all values of the signal were below the value of the stepping signal. In general, already one case in which there is no value of the signal larger than the stepping value is sufficient to determine that the signal was completely sampled.

Once this has been determined, the method then proceeds to step 407, where the cumulative distribution function is obtained from the information obtained so far. The cumulative distribution function will be obtained from those results, for example, by taking all counts indicating that the voltage of the stepping signal was smaller than the actual voltage values of the signal to be sampled. Thereby, figuratively speaking, the area below the signal is determined. After that, a normalizing can be applied to the respective counts. The normalizing comprises dividing the number of counts for each of the values of the stepping signal by the total number of the counts obtained in the respective time interval. This results in the actual cumulative distribution function.

Having obtained the cumulative distribution function, it is also possible to obtain the actual probability distribution function. This can be done by calculating the numerical derivative of the cumulative distribution function obtained in step 407 and results in step 408 in the probability distribution function being reconstructed from the actual signal.

Having obtained the CDF and before or while obtaining the probability distribution function in step 108 or after having performed it from the cumulative distribution function, some further processing can be applied. For example, before calculating the numerical derivative of the cumulative distribution function, processing may be applied to the cumulative distribution function obtained in step 407 comprising, for example, smoothing, de-noising or spline-fitting or expanding the cumulative distribution function using Chebyschev polynomials or other means. Also combinations of these means may be applied to the obtained cumulative distribution function before actually calculating the numerical derivative.

Once the numerical derivative is applied to the cumulative distribution function in order to obtain the probability distribution function, before actually outputting or otherwise determining the probability distribution function, some additional processing, such as, again de-noising or smoothing techniques of the obtained "raw" probability distribution function can be applied, for example, in order to remove numerical artifacts.

Having obtained the probability distribution function in step 408, this can be output for further evaluation or it can even be used when the method according to the invention is used during the actual processing of a physical random number generator in some kind of self-checking algorithm to (preferably automatically) determine whether the entropy source still reliably produces (perfectly) random values.

If, for example, the obtained probability distribution function of the system 101 in Figure 1 only deviates from a expected probability distribution function the system 101 would have under perfect (theoretical) conditions by no more than a preset threshold value, it can be assumed that the entropy source 101 works properly. If it deviates from the expected probability distribution function by more than the threshold value, it can be determined that the entropy source no longer works properly or does at least not provide random numbers reliably. This can then, for example, be indicated to a user or the production of random numbers can be stopped or if the cause for the deviation from the perfect probability distribution function can be identified (for example, thermal stress to the entropy source 101), other measures can be taken, such as automatically adjusting cooling means or heating means or the provision of current or voltage to the system 101 or increasing the compression ratio to be applied in the application of randomness extractors to accommodate for a lower input entropy rate.

By applying the inventive method using the one-bit comparator, however, the advantage of actually being able to obtain the probability distribution function reliably with inexpensive hardware and in a fast manner is achieved. In any case, this already reduces costs with regard to obtaining the probability distribution function at high accuracy and reduced time.

The above examples focus on the use of a one-bit comparator for obtaining the probability distribution function.

However, the very same method can also be applied when using multi-bit digitizers.

Specifically, in one embodiment, instead of using a one-bit comparator, a multi-bit digitizer may be used.

In this case, the signal to be sampled will be provided to one port of the multi-bit digitizer. As is known in the art, a multi-bit digitizer has a specific digitization range comprising a specific number of K bins (K larger than one), wherein at each bin, a digitization value is obtained from the signal once it is input into the input port of the multi-bit digitizer.

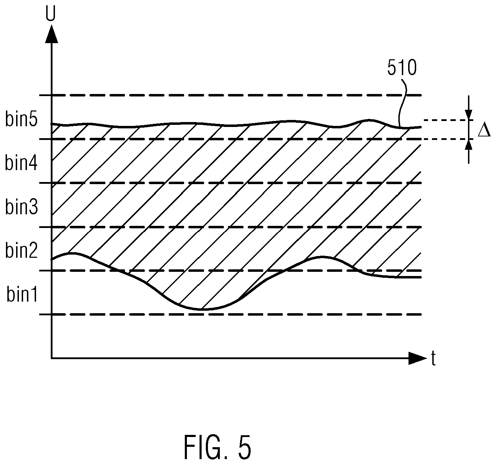

This is shown in figure 5 where there are K=5 bins (bin 1 to bin 5) provided. The signal 501 is a statistically stationary signal. This means that probability distribution function describing the signal is constant at least over the time over which the signal is processed in the depiction of fig. 5 and preferably even longer.

When applying a multi-bit digitizer, according to one embodiment of the invention, the method comprises, in a first step, calculating the counts of the signal for each bin, which corresponds to a specific voltage range. For example, when assuming that in total 100 counts are taken over the time t, the results may be as follows: Bin 1=10; Bin 2=20; Bin 3=35; Bin 4=15; Bin 5=20.

Once this is done, a shifting value Δ is applied in the next step over a subsequent time period (not shown in fig. 5) to either the signal itself or the digitization range of the multi-bit digitizer, such as the one performed for the one-bit digitizer with the values of the stepping signal. Thereby, the digitization value for each of the K bins is shifted relative to the signal.

With this, the digitization range is moved relative to the range of the signal. In each of these moves, the number of counts for the K bins is again determined. For example, as the number of total counts must remain constant, after the shifting, the situation in the bins may be Bin 1=5; Bin 2=25; Bin 3=45; Bin 4=5; Bin 5=20. As for the one-bit comparator embodiment, this shifting is preferably done until at least the range of the signal has been covered with the digitization range of the multi-bit digitizer. From the number of counts in each of the bins over all shifts, it is then possible (corresponding to the approach taken for the 1-bit comparator) to obtain the probability distribution function.

Such as for the above examples in the case of using a one-bit comparator, the shifting value can either be a fixed value or it can be dynamically determined by, for example, comparing the digitization range of the multi-bit comparator and the range of the signal. The larger the range of the signal is compared to the digitization range, the more shifting values will be necessary and, for example, the larger the shifting values will be set. For example, in case of a comparably large range of the signal, the shifting value may be selected to be identical to the digitization range of the multi-bit comparator or correspond to at least 0.95 times the digitization range. This results in a comparatively low resolution of the shifting, but will also result in covering the signal range with less steps, thereby reducing the time for obtaining the probability distribution function. Furthermore, if it is determined that the signal fluctuates significantly, the shifting range may be set to be small compared to the digitization range of the multi-bit digitizer, for example, 0.1 times the digitization range of the multi-bit digitizer. The range of the signal can also be smaller than the range of the multi-bit digitizer. In this case, the method can improve the resolution and precision of the statistics and also allow for the reconstruction of signals that are larger than the dynamic range of the digitizer.

As for the one-bit comparator embodiment, such conclusions can be made by processing the signal over its whole range in order to, for example, obtain information regarding the actual range over which the signal fluctuates and to thereby determine the shifting value to be applied.

In any case, after having obtained the probability distribution function with the multi-bit digitizer, further processing of the thus obtained probability distribution function can be applied as already explained previously with regard to Figure 4.

After or even without further processing of the probability distribution function, the probability distribution function can be used, for example, to determine the quality of the source or to further control a system for generating random numbers in the manner as explained above by, for example, reducing thermal stress to the entropy sources and the like. The probability distribution function can also be used to provide detailed statistical data about an arbitrary stochastic or fluctuating signal.

In this regard, also for the embodiment of the multi-bit digitizer, all the embodiments described above that do not explicitly refer to features that are only achievable with the one-bit digitizer can also be applied to the multi-bit digitizer embodiment.

## Claims

1. A device comprising one or more components that are adapted to perform a method for obtaining a cumulative distribution function from a signal, the signal having a range, the method comprising receiving the signal at a first port of a 1-bit comparator and applying a stepping signal at a second port of the comparator, the stepping signal having a stepping range that is less than the range of the signal, wherein the stepping signal is applied in a first step with a first value to the second port and in subsequent steps the subsequent value is increased or decreased by the stepping range compared to the value in the immediately preceding step, collecting, for each step, an output value at the output port of the comparator, collecting the output values for each of the steps and obtaining, from the collection of output values, the cumulative distribution function.

2. The device of claim 1, wherein the method further comprises the step of counting the number of output values from the comparator that are below the value of the stepping signal, normalizing the counts by the total number of output values accumulated during the application of a stepping value, and repeating the same process for all the stepping values of the stepping signal, obtaining the cumulative distribution function.

3. The device of claim 1 or 2, wherein the method further comprises, before applying the stepping signal, pre-processing the signal to determine a range of the signal where the signal fluctuates and applying the stepping signal with a first value that is smaller than the lower end of the range of the signal where the signal fluctuates and applying the stepping signal until a last value is reached that is larger than the upper end of the range of the signal where the signal fluctuates.

4. The device according to any of claims 1 to 3, wherein the stepping range is a fixed value.

5. The device of claim 4, wherein the fixed value is calculated by dividing the range of the signal by a stepping interval number N.

6. The device according to any of claims 1 to 3, wherein the stepping range is a dynamic value and wherein, for each subsequent step, the stepping range to be added to the previous value is determined based on at least one of the range of the signal, the output value at the output port of the comparator, or the number of steps already applied.

7. The device according to any of claims 1 to 6, wherein the method further comprises retrieving the probability distribution function from the cumulative distribution function by obtaining the derivative of the cumulative distribution function.

8. The device according to claim 7, wherein, before obtaining the derivative of the cumulative distribution function, the cumulative distribution function is preprocessed, comprising at least one of denoising, spline fitting, expanding.

9. A device comprising one or more components that are adapted to perform a method for obtaining a probability distribution function from a signal, the signal having a range, the method comprising receiving the signal at a port of a multi-bit digitizer having a digitization range and comprising a number of K bins, obtaining digitization values at the bins of the multi-bit digitizer and applying, subsequently, a shifting value to either the signal or the digitization range and obtaining a second number of K bins, wherein the shifting is applied successively over a shifting range until at least the range of the signal has been covered with the digitization range of the multi-bit digitizer and obtaining, from all K bins obtained, the probability distribution function.

10. The device according to claim 9, wherein the shifting value is a fixed value.

11. The device according to claim 10, wherein the shifting value and/or the number of shifts is determined by comparing the digitization range of the multi-bit comparator and the range of the signal.

12. The device of claim 11, wherein, before comparing the digitization range of the multi-bit comparator and the range of the signal, the signal is pre-processed over the total signal range, thereby obtaining a range over which the signal fluctuates and using the range over which the signal fluctuates as the range of the signal.

13. The device according to any of claims 9 to 12, wherein the method further comprises retrieving the cumulative distribution function from an integration of the probability distribution function.

14. The device according to any of claims 1 to 13, wherein the one or more components comprise or are a combination of electronic components that can interact, either based on hardware and/or based on software, to perform the steps of the method.

15. The device according to any of claims 1 to 14, wherein the device comprises an entropy source that is adapted to produce the signal.

## Patentansprüche

1. Eine Vorrichtung umfassend eine oder mehrere Komponenten, die ausgebildet sind ein Verfahren zum Erlangen einer kumulativen Verteilungsfunktion aus einem Signal durchzuführen, wobei das Signal einen Bereich hat, das Verfahren umfassend ein Empfangen des Signals an einem ersten Port eines 1-Bit Komparators und ein Anlegen eines Stufensignals an einen zweiten Port des Komparators, wobei das Stufensignal einen Stufenbereich hat, der geringer ist als der Bereich des Signals, wobei das Stufensignal in einem ersten Schritt mit einem ersten Wert an den zweiten Port angelegt wird und in nachfolgenden Schritten der nachfolgende Wert, verglichen mit dem Wert des unmittelbar vorhergehenden Schritts, um den Stufenbereich erhöht oder erniedrigt wird, wobei für jeden Schritt ein Ausgangswert an dem Ausgangs-Port des Komparators gesammelt wird, wobei die Ausgangswerte für jeden der Schritte gesammelt werden und aus der Sammlung der Ausgangswerte die kumulative Verteilungsfunktion erhalten wird.

2. Die Vorrichtung nach Anspruch 1, wobei das Verfahren außerdem umfasst den Schritt Zählen der Anzahl der Ausgangswerte des Komparators die kleiner sind als der Wert des Stufensignals, Normalisieren der Zahl mit der gesamten Anzahl der während dem Anlegen eines Stufenwertes gesammelten Ausgangswerte, und Wiederholen des gleichen Prozesses für alle Stufenwerte des Stufensignals und Erhalten der kumulativen Verteilungsfunktion.

3. Die Vorrichtung nach Anspruch 1 oder 2, wobei das Verfahren außerdem umfasst, vor Anlegen des Stufensignals, Vorverarbeiten des Signals um einen Bereich des Signals zu bestimmen, in welchem das Signal fluktuiert, und Anlegen des Stufensignals mit einem ersten Wert der kleiner ist als das untere Ende des Bereichs des Signals in welchem das Signal fluktuiert und Anlegen des Stufensignals bis ein letzter Wert erreicht wird, der größer ist als das obere Ende des Bereichs des Signals in welchem das Signal fluktuiert.

4. Die Vorrichtung nach einem der Ansprüche 1 bis 3, wobei der Stufenbereich ein festgelegter Wert ist.

5. Die Vorrichtung nach Anspruch 4, wobei der festgelegte Wert durch den Quotienten aus dem Bereich des Signals und einer Stufenintervall-Anzahl N berechnet wird.

6. Die Vorrichtung nach einem der Ansprüche 1 bis 3, wobei der Stufenbereich ein dynamischer Wert ist und wobei, für jeden nachfolgenden Schritt, der zu dem vorhergehenden Wert zu addierende Stufenbereich basierend auf wenigstens einem von dem Bereich des Signals, dem Ausgangswert an dem Ausgangs-Port des Komparators, oder der Anzahl der bereits angewendeten Schritte bestimmt wird.

7. Die Vorrichtung nach einem der Ansprüche 1 bis 6, wobei das Verfahren außerdem umfasst, Erlangen der Wahrscheinlichkeitsverteilungsfunktion von der kumulativen Verteilungsfunktion durch Erlangen der Ableitung der kumulativen Verteilungsfunktion.

8. Die Vorrichtung nach Anspruch 7, wobei bevor die Ableitung der kumulativen Verteilungsfunktion erhalten wird, die kumulative Verteilungsfunktion vorverarbeitet wird, umfassend wenigstens eines von einem Entrauschen, einer Spline Anpassung, einem Erweitern.

9. Eine Vorrichtung umfassend eine oder mehrere Komponenten, die ausgebildet sind, ein Verfahren zum Erlangen einer Wahrscheinlichkeitsverteilungsfunktion aus einem Signal durchzuführen, wobei das Signal einen Bereich hat, das Verfahren umfassend, Empfangen des Signals an einem Port eines Multi-Bit Digitalisierers, welcher einen Digitalisierungsbereich hat und einen Anzahl von K Bins umfasst, Erlangen von Digitalisierungswerten an den Bins des Multi-Bit Digitalisierers und anschließendes Anlegen eines Verschiebungswertes entweder an das Signal oder den Digitalisierungsbereich und Erhalten einer zweiten Anzahl von K Bins, wobei das Verschieben nacheinander über einen Verschiebungsbereich angewendet wird bis zumindest der Bereich des Signals mit dem Digitalisierungsbereich des Multi-Bit Digitalisierers erfasst ist und Erlangen der Wahrscheinlichkeitsverteilungsfunktion von allen erhaltenen K Bins.

10. Die Vorrichtung nach Anspruch 9, wobei der Verschiebungswert ein festgelegter Wert ist.

11. Die Vorrichtung nach Anspruch 10, wobei der Verschiebungswert und/oder die Anzahl an Verschiebungen durch Vergleich des Digitalisierungsbereichs des Multi-Bit Komparators mit dem Bereich des Signals bestimmt wird.

12. Die Vorrichtung nach Anspruch 11, wobei, bevor der Digitalisierungsbereich des Multi-Bit Komparators mit dem Bereich des Signals verglichen wird, das Signal über den gesamten Signalbereich vorverarbeitet wird und dabei ein Bereich erhalten wird, über welchen das Signal fluktuiert, und der Bereich über welchen das Signal fluktuiert als der Bereich des Signals verwendet wird.

13. Die Vorrichtung nach einem der Ansprüche 9 bis 12, wobei das Verfahren außerdem umfasst, Erlangen der kumulativen Verteilungsfunktion von einer Integration der Wahrscheinlichkeitsverteilungsfunktion.

14. Die Vorrichtung nach einem der Ansprüche 1 bis 13, wobei die eine oder mehreren Komponenten eine Kombination von elektronischen Komponenten umfassen oder sind, die, entweder basierend auf Hardware und/oder basierend auf Software, interagieren können, um die Schritte des Verfahrens durchzuführen.

15. Die Vorrichtung nach einem der Ansprüche 1 bis 14, wobei die Vorrichtung eine Entropiequelle umfasst, welche ausgebildet ist das Signal zu erzeugen.

## Revendications

1. Dispositif comprenant un ou plusieurs composants qui sont adaptés pour effectuer un procédé d'obtention d'une fonction de distribution cumulative à partir d'un signal, le signal présentant une plage, le procédé comprenant la réception du signal au niveau d'un premier port d'un comparateur sur 1 bit et l'application d'un signal en échelon au niveau d'un second port du comparateur, le signal en échelon ayant une plage d'échelonnement qui est inférieure à la plage du signal, dans lequel le signal en échelon est appliqué dans une première étape avec une première valeur au second port et dans les étapes suivantes, la valeur suivante est augmentée ou diminuée de la plage d'échelonnement par rapport à la valeur de l'étape immédiatement précédente, la collecte, pour chaque étape, d'une valeur de sortie au niveau du port de sortie du comparateur, la collecte des valeurs de sortie pour chacune des étapes et l'obtention, à partir de la collecte de valeurs de sortie, de la fonction de distribution cumulative.

2. Dispositif de la revendication 1, dans lequel le procédé comprend en outre l'étape consistant à compter le nombre de valeurs de sortie du comparateur qui sont inférieures à la valeur du signal en échelon, à normaliser les comptages par le nombre total de valeurs de sortie accumulées pendant l'application d'une valeur d'échelonnement, et à répéter le même processus pour toutes les valeurs d'échelonnement du signal en échelon, ce qui permet d'obtenir la fonction de distribution cumulative.

3. Dispositif de la revendication 1 ou 2, dans lequel le procédé comprend en outre, avant d'appliquer le signal en échelon, le prétraitement du signal pour déterminer une plage du signal où le signal fluctue et l'application du signal en échelon avec une première valeur qui est inférieure à l'extrémité inférieure de la plage du signal où le signal fluctue et l'application du signal en échelon jusqu'à ce qu'une dernière valeur soit atteinte qui est supérieure à l'extrémité supérieure de la plage du signal où le signal fluctue.

4. Dispositif selon l'une des revendications 1 à 3, dans lequel la plage d'échelonnement est une valeur fixe.

5. Dispositif de la revendication 4, dans lequel la valeur fixe est calculée en divisant la plage du signal par un nombre d'intervalles d'échelonnement N.

6. Dispositif selon l'une des revendications 1 à 3, dans lequel la plage d'échelonnement est une valeur dynamique et dans lequel, pour chaque étape suivante, la plage d'échelonnement à ajouter à la valeur précédente est déterminée sur la base d'au moins l'une de la plage du signal, de la valeur de sortie au niveau du port de sortie du comparateur ou du nombre d'échelons déjà appliqués.

7. Dispositif selon l'une des revendications 1 à 6, dans lequel le procédé comprend en outre la récupération de la fonction de distribution de probabilité à partir de la fonction de distribution cumulative en obtenant la dérivée de la fonction de distribution cumulative.

8. Dispositif selon la revendication 7, dans lequel, avant d'obtenir la dérivée de la fonction de distribution cumulative, la fonction de distribution cumulative est prétraitée, comprenant au moins l'un parmi le débruitage, l'ajustement de spline, et l'expansion.

9. Dispositif comprenant un ou plusieurs composants qui sont adaptés pour effectuer un procédé d'obtention d'une fonction de distribution de probabilité à partir d'un signal, le signal présentant une plage, le procédé comprenant la réception du signal au niveau d'un port d'un numériseur multibit ayant une plage de numérisation et comprenant un nombre de K cases, l'obtention de valeurs de numérisation au niveau des cases du numériseur multibit et l'application, par la suite, d'une valeur de décalage soit au signal soit à la plage de numérisation et l'obtention d'un second nombre de K cases, dans lequel le décalage est appliqué successivement sur une plage de décalage jusqu'à ce qu'au moins la plage du signal ait été couverte par la plage de numérisation du numériseur multibit et l'obtention, à partir de toutes les K cases obtenues, de la fonction de distribution de probabilité.

10. Dispositif selon la revendication 9, dans lequel la valeur de décalage est une valeur fixe.

11. Dispositif selon la revendication 10, dans lequel la valeur de décalage et/ou le nombre de décalages est déterminé en comparant la plage de numérisation du comparateur multibit et la plage du signal.

12. Dispositif de la revendication 11, dans lequel, avant de comparer la plage de numérisation du comparateur multibit et la plage du signal, le signal est prétraité sur la plage totale du signal, ce qui permet d'obtenir une plage sur laquelle le signal fluctue et d'utiliser la plage sur laquelle le signal fluctue comme étant la plage du signal.

13. Dispositif selon l'une des revendications 9 à 12, dans lequel le procédé comprend en outre la récupération de la fonction de distribution cumulative à partir d'une intégration de la fonction de distribution de probabilité.

14. Dispositif selon l'une des revendications 1 à 13, dans lequel le ou les plusieurs composants comprennent ou sont une combinaison de composants électroniques qui peuvent interagir, soit sur la base de matériel et/ou sur la base de logiciel, pour effectuer les étapes du procédé.

15. Dispositif selon l'une des revendications 1 à 14, dans lequel le dispositif comprend une source d'entropie qui est adaptée pour produire le signal.
